Europäisches Patentamt

European Patent Office

Office européen des brevets

(19)

(11) Veröffentlichungsnummer: **0 022 184**

**A1**

(12) **EUROPÄISCHE PATENTANMELDUNG**

(21) Anmeldenummer: **80103235.0**

(22) Anmeldetag: **11.06.80**

(51) Int. Cl.³: **C 08 J 7/10**
**B 32 B 27/16**

(30) Priorität: **22.06.79 DE 2925205**

(43) Veröffentlichungstag der Anmeldung:
**14.01.81 Patentblatt 81/2**

(84) Benannte Vertragsstaaten:
**BE CH DE FR GB IT LI NL SE**

(71) Anmelder: **BAYER AG**
**Zentralbereich Patente, Marken und Lizenzen**
**D-5090 Leverkusen 1, Bayerwerk(DE)**

(72) Erfinder: **Bartl, Herbert, Dr.**
**Eichendorffweg 10**
**D-5068 Odenthal(DE)**

(72) Erfinder: **Burgdörfer, Hans-Heribert, Dr.**
**Goffineweg 49**
**D-5000 Köln 80(DE)**

(72) Erfinder: **Lehnert, Günther, Dr.**
**2200 Powell Street**
**Emeryville California 94608(US)**

(54) **Verfahren zur Herstellung dampfsterilisierbarer, siegelbarer Folien, so hergestellte Folien und Behälter aus diesen Folien.**

(57) Verfahren zur Herstellung dampfsterilisierbarer und heiß-siegelfähiger Folien, bei dem man eine Folie aus einem vernetzbaren Polymeren einseitig mit ionisierender Strahlung einer solchen Intensität bestrahlt, daß die Folie an der bestrahlten Oberfläche vernetzt und an der gegenüberliegenden unvernetzt bleibt.

EP 0 022 184 A1

BAYER AKTIENGESELLSCHAFT          5090 Leverkusen, Bayerwerk
Zentralbereich
Patente, Marken und Lizenzen          G/Rz

BE~~~~~~~~~~~~~~ÄNDERT.
siehe Titelseite

Dampfsterilisierbare, siegelbare Folien

Gegenstand der Erfindung sind transparente, weiche,
flexible Folien, die sich heiß versiegeln lassen, die mit
Wasserdampf sterilisierbar sind, und nur aus zur Verpackung
von Lebensmitteln und Medikamenten geeigneten Materialien
bestehen, sowie ein Verfahren zu ihrer Herstellung. Diese
Folien besitzen auch gute Wasserdampfsperrwirkung.

Folien, einschließlich Verbundfolien aus Ethylen/Vinylacetat-Copolymerisaten, Polyethylen und Polypropylen sind
bekannt. Doch sind sie nicht wärmestabil oder nicht
flexibel genug. Bekannt ist auch, Polymere durch energiereiche Strahlen zu vernetzen und damit unschmelzbar zu
machen. Dann lassen sie sich jedoch nicht mehr siegeln.
Man hat auch versucht, vernetztes und damit sterilisationsfestes Ethylen-Vinylacetat-Copolymerisat mit einem Thermoplasten als Siegelschicht zu beschichten, aber diese
Schicht neigt zur Delaminierung. Es wurde nun gefunden,
daß man dampfsterilisierbare und heiß siegelfähige Folien
erhält, wenn man eine Folie aus einem vernetzbaren Polymeren einseitig mit ionisierender Strahlung einer solchen

Le A 19 628 - Europa

Intensität bestrahlt, daß die Folie an der bestrahlten Oberfläche vernetzt und an der gegenüberliegenden unvernetzt bleibt. Als ionisierende Strahlung ist energiereiche Elektronenstrahlung bevorzugt, weil sie sich besonders gut dosieren läßt. Wegen der vernetzten Schicht sind so behandelte Folien dampfsterilisierbar; sie bleiben aber wegen der unvernetzten Oberfläche auch heißsiegelfähig.

Bevorzugt bestrahlt man erfindungsgemäß Verbundfolien, die aus Schichten von Polymerisaten verschiedener Vernetzbarkeit bestehen. Man erreicht dann, daß das leichter vernetzbare Polymerisat vollständig durchvernetzt, während das schwer vernetzbare Polymerisat unvernetzt bleibt bzw. nur so wenig anvernetzt, daß es noch schmelzbar und damit siegelfähig bleibt.

Folien aus einem einheitlichen Polymer, die erfindungsgemäß verwendet werden können, sind insbesondere Folien aus Copolymeren von Olefinen (wie Ethylen und/oder Propylen) mit polaren Vinylmonomeren wie Vinylestern, z.B. Vinylacetat oder Acrylestern oder ungesättigten Carbonsäuren wie Acrylsäure oder Methacrylsäure.

Der Mindestgehalt an Comonomer ist 8 Gew.-%. Die Folien können auch weitere Monomere einpolymerisiert enthalten, beispielsweise ungesättigte Carbonsäuren, wie Acrylsäure und Methacrylsäure oder Kohlenmonoxid. Besonders günstig sind Folien aus Ethylen-Vinylacetat-Acrylester-Terpolymerisaten mit 20 bis 50 Gew.-% einpolymerisiertem Acrylsäureester, insbesondere Ethylacrylat, Butylacrylat oder tert.-Butylacrylat, sowie Ethylen-Vinylacetat-Copolymerisate mit 20 bis 50 Gew.-% Vinylacetat. Diese Folien lassen sich mit besonders geringer Strahlungsdosis vernetzen und haben im vernetzten Zustand besonders gute Flexibilität.

Verwendet man Verbundfolien, dann besteht die eine Schicht bevorzugt aus den bisher beschriebenen Copolymerisaten und die andere aus Polyolefinen, z.B. Polyethylen, Polypropylen oder Ethylen-Propylen-Copolymerisaten. Besonders bevorzugt sind Verbundfolien aus Ethylen/Vinylacetat-Copolymerisaten und Polyethylen oder Polypropylen. Diese Polyolefine sind schwerer vernetzbar, man braucht für ihre Vernetzung eine Strahlungsdosis, die mindestens 2 Megarad höher ist als die für die erstgenannten Folien erforderliche.

Als ionisierende Strahlen kommen beschleunigte Elektronenstrahlen infrage, ebenso wie kurzwellige elektromagnetische Strahlen, wie UV-, $\gamma$-, oder Röntgenstrahlen.

Zur Herstellung von Verbundfolien wird z.B. ein Ethylen-Vinylester-Copolymerisat und ein Polyolefin coextrudiert. Die so gewonnenen Folien werden bevorzugt mit energiereichen Elektronenstrahlen bestrahlt, wobei die Dosierung so abgestimmt wird, daß die Schicht aus Ethylen-Vinylester-Copolymerisat vernetzt wird, während die Schicht aus Polyolefin nicht oder nur wenig vernetzt.

Besonders gut geeignet sind Polymerisat-Kombinationen in den Extrusionsfolien, für die Bestrahlungsdosen von 2 bis 10 Megarad ausreichen. Besonders günstig ist die Kombination von Ethylen-Vinylacetat-Copolymeren mit einem Vinylacetatgehalt von 20 - 50 % und Polyethylen oder Polypropylen. Man benötigt hierbei eine Bestrahlungsdosis von 2 bis 12 Megarad.

Durch die Kombination verschiedener Polymerisate in den Verbundfolien lassen sich noch zusätzliche wünschenswerte Effekte erzielen. Die Verwendung von Polyethylen oder Polypropylen als siegelbare Schicht bringt z.B. eine Verminderung der Wasserdampfdurchlässigkeit, während eine

Le A 19 628

Folie aus verseiften hochacetathaltigen Ethylen-Vinylacetat-Copolymeren eine hervorragende Sauerstoff-Sperrwirkung bringt. Für die Verwendung als Blutbeutel können die Innenschichten der Beutel auch mit aggregationshemmenden Substanzen beschichtet sein oder aus solchem (Folien)Material bestehen. Verbundfolien können nach den üblichen Herstellungsverfahren erzeugt werden. d.h. nicht nur durch Coextrusion, sondern auch durch Laminierung bzw. nachträgliche Verklebung der bereits hergestellten Folien oder durch Beschichtungen. Coextrusion ist jedoch bevorzugt.

Schichtweise, durch Bestrahlung teilvernetzte Folien lassen sich auch aus thermoplastischen Monofolien herstellen. Während bei Bestrahlung mit $\beta$-Strahlen oder hochbeschleunigten Elektronen die Vernetzungsstellen des Polymermaterials in der Regel gleichmäßig über den Folienquerschnitt verteilt werden, läßt sich die Reaktion bei $\beta$-Bestrahlung durch Variation der Beschleunigungsspannung so steuern, daß nur eine bestimmte Schichtdicke von der Oberfläche her vernetzt wird. Erfindungsgemäß werden Elektronenspannung und Strahlungsdosis so gewählt, daß eine Folienschicht ausreichend vernetzt wird, während die abgewandte Schicht noch siegelbar bleibt. Besonders gut geeignet sind Ethylen-Vinylacetat-Folien, die z.B. bei einer Stärke von 200 $\mu$ mit Elektronen von 150 - 400 kV, und 2 - 12 Megarad, vorzugsweise 320 kV. 6 Megarad bestrahlt werden.

Coextrudierte Folien eignen sich für die Lebensmittel- und Arzneimittelverpackung, da sie aus physiologisch unbedenklichen Polymeren hergestellt werden können und Kleber und Kaschiermittel entbehrlich sind.

Arzneimittel sind z.B. Infusionslösungen, Injektionsmaterialien, Blutersatzstoff.

Patentansprüche:

1. Verfahren zur Herstellung dampfsterilisierbarer und heißsiegelfähiger Folien, dadurch gekennzeichnet, daß man eine Folie aus einem vernetzbaren Polymeren einseitig mit ionisierender Strahlung einer solchen Intensität bestrahlt, daß die Folie an der bestrahlten Oberfläche vernetzt und an der gegenüberliegenden weitgehend unvernetzt bleibt.

2. Verfahren nach Anspruch 1, dadurch gekennzeichnet, daß man Verbundfolien bestrahlt, die aus Polymerisaten verschiedener Vernetzbarkeit bestehen.

3. Verfahren nach Anspruch 1, dadurch gekennzeichnet, daß man als ionisierende Strahlung energiereiche Elektronenstrahlung verwendet.

4. Verfahren nach Anspruch 2, dadurch gekennzeichnet, daß die Verbundfolie aus einer Ethylen-Vinylacetat- oder Ethylen-Vinylacetat- und/oder Acrylat-Copolymerisat-Folie (mit 20 bis 50 Gew.-% Vinylacetat bzw. Acrylat und aus einer Polyethylen- oder Polypropylen-Folie besteht.

5. Verfahren nach Anspruch 2, dadurch gekennzeichnet, daß die Verbundfolie aus einer verseiften und einer nichtverseiften Ethylen-Vinylacetat-Copolymerisat-Folie und gegebenenfalls einer Polyethylen- oder Polypropylen-Folie besteht.

6. Vernetzte Polymerfilme erhalten nach Anspruch 1.

7. Geschlossene Behälter aus vernetzten Filmen, die nach Anspruch 1 hergestellt werden.

Le A 19 628 - Europa

**0022184**

Nummer der Anmeldung

EP 80103235.0

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DD - A -   94 497</u> (SCHILLER)<br>  * Gesamt * | 1,3 |
| | -- | |
| | <u>GB - A - 1 249 015</u> (ICI)<br>  * Gesamt * | 1-3,6 |
| | -- | |
| | <u>US - A - 4 044 187</u> (KREMKAU)<br>  * Gesamt * | 1-7 |
| | ---- | |

**KLASSIFIKATION DER ANMELDUNG (Int.Cl. 3)**

C 08 J  7/10
B 32 B 27/16

**RECHERCHIERTE SACHGEBIETE (Int. Cl. 3)**

C 08 J
B 32 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 03-09-1980 | WEIGERSTORFER |

EPA form 1503.1   06.78